# EUROPÄISCHE PATENTANMELDUNG

(11) **EP 1 892 134 A1**
(43) Veröffentlichungstag der Anmeldung: **27.02.2008**
(21) Anmeldenummer: 07112653.6
(22) Anmeldetag: 17.07.2007
(51) Int. Cl.: B60J 3/02

(54) **Sonnenschutzvorrichtung mit elektrischem Sonnenschott**

(30) Priorität: 17.07.2006 DE 102006032977
(71) Anmelder: Wagon Automotive FKT GmbH, 85104 Pförring (DE)
(72) Erfinder: Feigl, Michael, 85055 Mailing (DE)
(74) Vertreter: Guéné, Patrick Lucien Juan Joseph

(57) **Zusammenfassung**

Sonnenschutzvorrichtung 1, insbesondere zur Anordnung an einer Hutablage 8 oder Hutablagenteil 9, umfassend ein Sonnenschott 5 und zumindest eine Lagereinrichtung 10, die eine Drehung des Sonnenschotts 5 zwischen einer ersten Stellung als Ruhestellung und einer zweiten Stellung als Funktionsstellung ermöglicht, wobei zumindest ein Federelement 40 vorgesehen ist, welches das Sonnenschott 5 in der ersten Stellung vorspannt und zumindest eine Betätigungseinrichtung 30 vorgesehen ist, die eine Betätigung entgegen der Vorspannung des zumindest einen Federelements 40 in Richtung der zweiten Stellung ermöglicht.

## Beschreibung

Die Erfindung betrifft eine Sonnenschutzvorrichtung, welche im Bereich einer Heckscheibe, insbesondere an einer Hutablage oder Hutablagenteil eines Kraftfahrzeuges angeordnet ist, umfassend ein Sonnenschott und zumindest eine Lagereinrichtung, die eine Drehung des Sonnenschotts zwischen einer ersten Stellung als Ruhestellung und einer zweiten Stellung als Funktionsstellung ermöglicht.

Aus dem Stand der Technik sind verschiedene Blend- und Sonnenschutzvorrichtungen für Kraftfahrzeuge bekannt, die je nach Licht- und Sonnenverhältnissen von Hand bedient werden müssen. Insbesondere bei stark geneigten Heckscheiben von Personenkraftwagen ist eine erhöhte Sonneneinstrahlung gegeben und damit eine Aufheizung des Innenraums verbunden.

Aus der DE 102 19 610 A1 ist ein Sonnenschott bekannt, welches auf einer Hutablage angeordnet ist. Es kann zwischen einer ersten und einer zweiten Stellung mittels eines drehbar gelagerten Scharnierhebels verschwenkt werden. Der Scharnierhebel ist in einem Profil über ein Federpaket gelagert, welches bei einer Schwenkbewegung des Sonnenschotts verdreht wird. Das Profil, in welchem der Scharnierhebel gelagert ist, verläuft in der Drehebene zwischen der Hutablage und der Längserstreckung des Sonnenschotts.

Das offenbarte Sonnenschott ist zwar sehr funktionssicher, jedoch ist bei jedem Schwenkvorgang des Sonnenschotts ein manuelle Bedienung erforderlich. Möchte ein Fahrer während der Fahrt das Sonnenschott verstellen, weil sich beispielsweise die Sonneneinstrahlung verändert hat, so muss dieser Anhalten, was Zeit kostet und den Komfort verringert. Außerdem besteht die Möglichkeit, dass der Fahrzeughimmel bzw. die Autodachverkleidung oder das Sonnenschott selbst beschädigt wird, wenn das Sonnenschott sich in geöffneter Funktionsstellung befindet und der Kofferraum unachtsam geöffnet wird.

Aufgabe der vorliegenden Erfindung ist es daher, eine Sonnenschutzvorrichtung mit einem Sonnenschott bereitzustellen, die motorisch betrieben wird, einfach auch während der Fahrt vom Fahrer zu bedienen ist, eine hohe Funktionssicherheit aufweist, den Fahrkomfort steigert und die Verkehrssicherheit verbessert.

Erfindungsgemäß wird die Aufgabe der vorliegenden Erfindung durch die Merkmale des unabhängigen Patentanspruches 1 gelöst, wobei zweckmäßige Ausführungsformen durch die Merkmale der abhängigen Ansprüche beschrieben sind.

Insbesondere schlägt die vorliegende Erfindung eine Sonnenschutzvorrichtung vor, insbesondere zur Anordnung an einer Hutablage oder Hutablagenteil, umfassend ein Sonnenschott und zumindest eine Lagereinrichtung, die eine Drehung des Sonnenschotts zwischen einer ersten Stellung als Ruhestellung und einer zweiten Stellung als Funktionsstellung ermöglicht, wobei zumindest ein Federelement vorgesehen ist, welches das Sonnenschott in der ersten Stellung vorspannt und zumindest eine Betätigungseinrichtung vorgesehen ist, die eine Betätigung entgegen der Vorspannung des Federelements in Richtung der zweiten Stellung ermöglicht.

Das Sonnenschott ist auf einer Hutablage oder einem Hutablagenteil eines Kraftfahrzeuges angeordnet und vorzugsweise im Bereich einer Heckscheibe ausgebildet. Es ist in der Hutablage oder Hutablagenteil versenkt angeordnet, so dass eine ebene Oberfläche ausgebildet wird. Beim Herausnehmen der Hutablage oder des Hutablagenteils wird das Sonnenschott automatisch anliegend gehalten.

Die zumindest eine Lagereinrichtung ermöglicht ein Verschwenken des Sonnenschotts zwischen der ersten und der zweiten Stellung. Das Sonnenschott wird durch das zumindest eine Federelement in der ersten Stellung, die auch die geschlossene Position darstellt, vorgespannt gehalten. Die zumindest eine Betätigungseinrichtung schwenkt bzw. öffnet das Sonnenschott in eine gewünschte Position in Richtung der zweiten Stellung. Durch die zumindest eine Betätigungseinrichtung kann beispielsweise eine stufenweise bzw. schrittweise Verschwenkung des Sonnenschotts je nach Bedarf und Sonneneinstrahlung bereitgestellt werden.

Für den Fall, dass das Sonnenschott sich in der zweiten Stellung befindet und der Kofferraumdeckel geöffnet wird, bringt die zumindest eine Betätigungseinrichtung das Sonnenschott automatisch in die erste Stellung, um eine Beschädigung des Fahrzeughimmels oder eine Kollision mit anderen Gegenständen und Personen zu verhindern.

Durch eine derartige Ausgestaltung ist jederzeit ein Verstellen des Sonnenschotts möglich, so dass in Abhängigkeit von der Sonneneinstrahlung und den Bedürfnissen der Fahrzeuginsassen eine gewünschte Sonnenschottstellung einstellbar ist, wobei eine manuelle Bedienung auf Grund der Betätigungseinrichtung nicht erforderlich, aber möglich ist und dadurch der Komfort erhöht werden kann.

Vorteilhafter Weise weist das Sonnenschott an beiden distalen Enden eine Lagereinrichtung auf. Dadurch kann eine optimale Lagerung bereitgestellt werden und eine Störanfälligkeit verhindert werden.

Des Weiteren ist es von Vorteil, dass die beiden Lagereinrichtungen durch eine Betätigungseinrichtung angetrieben werden. Dadurch kann beim Einbau einerseits Zeit und Kosten und andererseits Platz eingespart werden. Durch eine Betätigungseinrichtung wird an beiden Lagereinrichtungen ein gleichmäßiger Schwenkvorgang bereitgestellt.

Bevorzugter Weise ist an beiden Lagereinrichtungen jeweils eine Betätigungseinrichtung vorgesehen, da damit eine höhere Kraftübertragung zur Verfügung gestellt werden kann.

Vorteilhafter Weise umfasst die zumindest eine Lagereinrichtung einen drehbar gelagerten Scharnierhebel, eine Schwenkachse, einen Zapfen und ein Lagergehäuse, in der das zumindest eine Federelement ausgebildet ist. Der Scharnierhebel erlaubt einerseits eine drehbare Lagerung und andererseits eine stabile Befestigung des Sonnenschotts. Das Federelement drückt das Sonnenschott in Richtung der ersten Stellung. Das Lagergehäuse ist an der Hutablage oder dem Hutablagenteil befestigt.

Weiterhin ist es von Vorteil, wenn der Scharnierhebel in einem Profil über das zumindest eine Federelement gelagert ist. Das zumindest eine Federelement ist als Schenkelfeder ausgeführt,
wobei das Sonnenschott in der Ruhestellung durch das zumindest eine Federelement eine Vorspannung erfährt. Die Betätigungseinrichtung stellt das Sonnenschott von der ersten Stellung in die zweite Stellung entgegen der Federkraft auf. Das Zurückschwenken des Sonnenschotts von der zweiten in die erste Stellung kann alleine durch die Federkraft bereitgestellt werden. Andererseits kann das Sonnenschott von der zweiten in die erste Stellung auch durch die Betätigungseinrichtung geschwenkt werden.

Der Scharnierhebel kann in einer Endkappe des Profils angeordnet werden, um eine sichere Befestigung der Sonnenschutzvorrichtung an der Hutablage bereitzustellen, welche auch bei Einwirkung höherer Kräfte die Sonnenschutzeinrichtung sicher an der Hutablage hält.

Bevorzugter Weise weist der Zapfen der zumindest einen Lagereinrichtung eine Nut auf. Über die Nut kann eine Kraftübertragung von der Betätigungseinrichtung stattfinden. Ferner wird dadurch eine Lösbarkeit der Hutablage sichergestellt.

Eine sichere Befestigung kann zur Verfügung gestellt werden, wenn das zumindest eine Lagergehäuse an der Hutablage oder Hutablagenteil befestigt wird.

Vorteilhafter Weise umfasst die zumindest eine Betätigungseinrichtung eine Antriebswelle, die innerhalb des Zapfens der zumindest einen Lagereinrichtung radial verschiebbar ausgebildet ist. Durch eine derartige Ausgestaltung kann eine einfache und kostengünstige Entkopplung bereitgestellt werden, so dass alleine durch das zumindest eine Federelement eine Rückstellung des Sonnenschotts in die Ruhestellung ermöglicht wird.

Ferner ist es von Vorteil, wenn die Antriebswelle der zumindest einen Betätigungseinrichtung und die Schwenkachse der zumindest einen Lagereinrichtung fluchtend oder versetzt ausgebildet ist, da dadurch eine einfache Kopplung bereitgestellt werden kann.

Weiterhin ist es von Vorteil, wenn das Sonnenschott eine Drehachse aufweist, die zur Antriebswelle der zumindest einen Betätigungseinrichtung fluchtend oder versetzt ausgebildet ist.

Die Schwenkachse der zumindest einen Lagereinrichtung und die Antriebswelle der zumindest einen Betätigungseinrichtung sind in Eingriff bringbar. Die Schwenkachse weist einen Eingriffsabschnitt und die Angriffswelle ein Eingriffsbauteil auf, wobei diese in Eingriff gebracht werden können und dadurch eine Drehung des Sonnenschotts ermöglicht wird.

Die Drehachse des Sonnenschotts und die Schwenkachse der Lagereinrichtung weisen jeweils einen Flansch auf und sind in Eingriff bringbar. Vorzugsweise ist an beiden Flanschen eine Verzahnung vorgesehen. Alternativ können die Drehachse und die Schwenkachse als Reibkupplung ausgebildet sein.

Vorteilhafter Weise ist die Schwenkachse der zumindest einen Lagereinrichtung und die Antriebswelle der zumindest einen Betätigungseinrichtung durch eine formschlüssige Schaltkupplung, eine kraft- bzw. reibschlüssige Schaltkupplung oder eine selbsttätig schaltende Kupplung verbunden.

Bevorzugter Weise ist die Schwenkachse der zumindest einen Lagereinrichtung und die Antriebswelle der zumindest einen Betätigungseinrichtung eine selbstlösende Kupplung, insbesondere Rutschkupplung ausbildet, so dass bei Krafteinwirkung auf das Sonnenschott eine Rückstellung des Sonnenschotts durch die Vorspannung des zumindest einen Federelements ermöglicht wird.

Vorteilhafter Weise ist die zumindest eine Betätigungseinrichtung über eine Steuereinheit steuerbar. Die Steuereinheit kann mit einem Steuergerät des Fahrzeugs gekoppelt werden, so dass beispielsweise für den Fall der Entriegelung des Kofferraums automatisch das Sonnenschott in die Ruhestellung geschwenkt wird. Das Steuergerät kann zudem die Verstellung des Sonnenschotts vom Fahrersitz des Fahrzeugs aus ermöglichen, beispielsweise mittels eines am Armaturenbrett angeordneten Bedienelementes.

Es ist von Vorteil, wenn an der zumindest einen Lagereinrichtung zumindest ein Dämpfungselement vorgesehen ist, um ein geräuschloses Rückstellen des Sonnenschotts und eine Beschädigung zu vermeiden. Insbesondere Silikondämpfer und dergleichen können eingesetzt werden.

Bevorzugter Weise beträgt der Schwenkweg zwischen der ersten und der zweiten Stellung etwa 90°, vorzugsweise weniger als 120°, um je nach Sonneneinstrahlung eine gewünschte Sonnenschottstellung bereitzustellen. In der Ruhestellung ist das Sonnenschott dabei im Wesentlichen horizontal, während es in der Funktionsstellung im Wesentlichen vertikal angeordnet ist.

Schließlich ist es von Vorteil, dass die zumindest eine Betätigungseinrichtung ein Elektromotor ist. Der Elektromotor ermöglicht eine stufen- und schrittweise Schwenkung des Sonnenschotts. Ferner können verschiedene motorische Antriebseinheiten verwendet werden.

Die Erfindung wird nachfolgend an Hand einer beispielhaften und demzufolge nicht einschränkenden Beschreibung, sowie unter Bezugnahme auf die beiliegenden Zeichnungen näher erläutert. Dabei zeigt:
Figur 1 eine perspektivische Ansicht einer Hutablage mit geöffneten Sonnenschott;
Figur 2 eine perspektivische Ansicht einer Hutablage mit geöffneten Sonnenschott im Bereich einer Heckscheibe;
Figur 3 eine perspektivische Ansicht einer geteilten Hutablage mit geöffneten Sonnenschott;
Figur 4 eine der Figur 3 entsprechende Darstellung im Bereich einer Heckscheibe;
Figur 5 eine perspektivische Darstellung der in Figur 3 dargestellten Sonnenschutzvorrichtung mit geschlossenen Sonnenschott;
Figur 6 eine perspektivische Teildarstellung einer Sonnenschutzvorrichtung;
Figur 7 eine der Figur 6 entsprechende perspektivische Teildarstellung einer Sonnenschutzvorrichtung;
Figur 8 eine perspektivische Darstellung einer bevorzugten Ausführungsform einer Betätigungseinrichtung und einer Lagereinrichtung einer Sonnenschutzvorrichtung;
Figur 9 eine perspektivische Teilansicht einer bevorzugten Kupplungsanordnung einer Sonnenschutzvorrichtung;
Figur 10 eine perspektivische Darstellung einer Betätigungseinrichtung und einer Lagereinrichtung;
Figur 11 eine gedrehte perspektivische Darstellung von Figur 8;
Figur 12 eine weitere gedrehte perspektivische Darstellung von Figur 8.

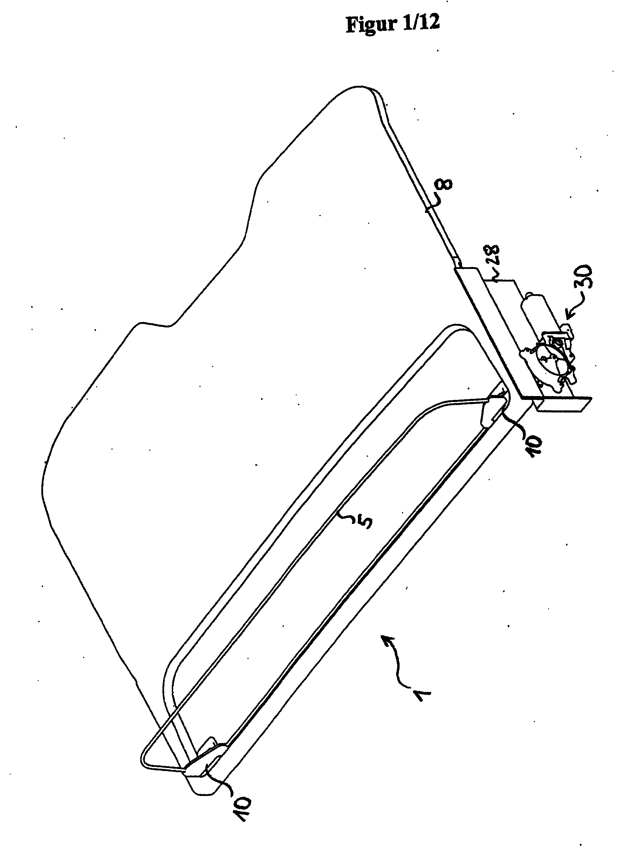

Figur 1 zeigt eine perspektivische Ansicht einer Sonnenschutzvorrichtung 1 mit geöffneten Sonnenschott 5. Das Sonnenschott 5 ist an einer Hutablage 8 ausgebildet. Das Sonnenschott 5 kann über zwei Lagereinrichtungen 10 von einer ersten Stellung, die auch als Ruhestellung oder geschlossene Stellung bezeichnet wird, in eine zweite Stellung, die auch Funktionsstellung oder offene Stellung bezeichnet wird, verschwenkt bzw. gedreht werden.

In Figur 1 ist die zweite Stellung dargestellt. An einer Lagereinrichtung 10 ist eine Betätigungseinrichtung 30 angeordnet. Die Betätigungseinrichtung 30 ist ein Elektromotor, der das Sonnenschott 5 in die zweite Stellung schwenkt, wobei Zwischenstellungen möglich sein können. Der Elektromotor ist in der Seitenverkleidung in einem Kofferraum angeordnet oder wird durch eine Seitenverkleidung bzw. Rahmen 28 geschützt. Die Hutablage 8 weist eine Vertiefung auf, in der das Sonnenschott 5 versenkt werden kann. Die beiden Lagereinrichtungen 10 und die Betätigungseinrichtung 30 sind unterhalb der Hutablage 8 angeordnet, so dass hierdurch Platz gespart werden kann.

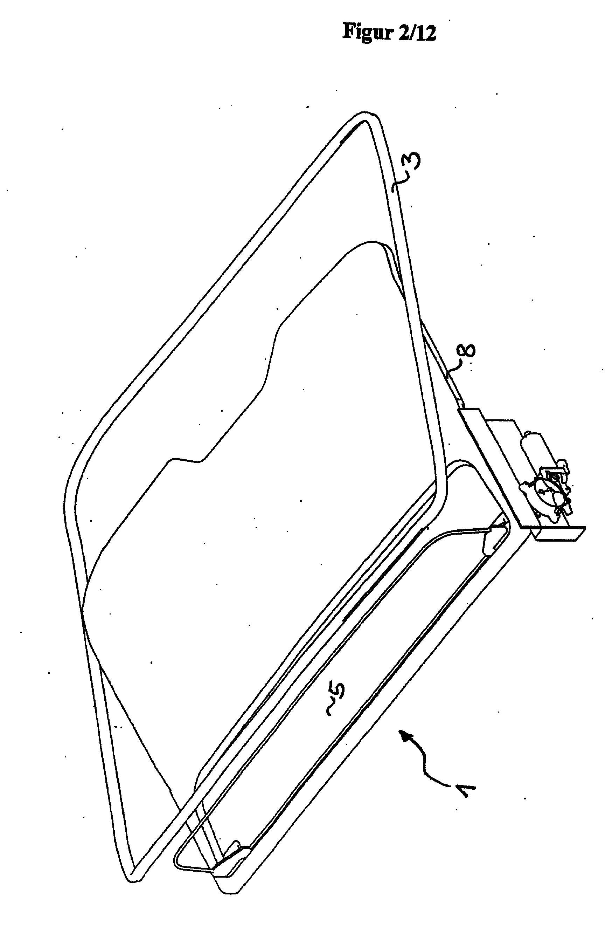

In Figur 2 ist eine perspektivische Ansicht entsprechend von Figur 1, wobei die Sonnenschutzvorrichtung im Bereich einer Heckscheibe 3 dargestellt ist. Die Hutablage 8 grenzt an die Heckscheibe 3 an. Das Sonnenschott 5 reicht in geöffneter Stellung vorzugsweise nahe an die Heckscheibe 3 heran, so dass die Sonneneinstrahlung in den Fahrzeuginnenraum verringert wird. Beim Öffnen des Kofferraumdeckels, der hier nicht dargestellt ist, wird automatisch das Sonnenschott 5 von der zweiten Stellung in die erste Stellung geschwenkt. Dadurch kann insbesondere eine Beschädigung des Fahrzeughimmels bzw. eine Kollision mit anderen Gegenständen, Personen oder mit Kopfstützen der Sitze verhindert werden.

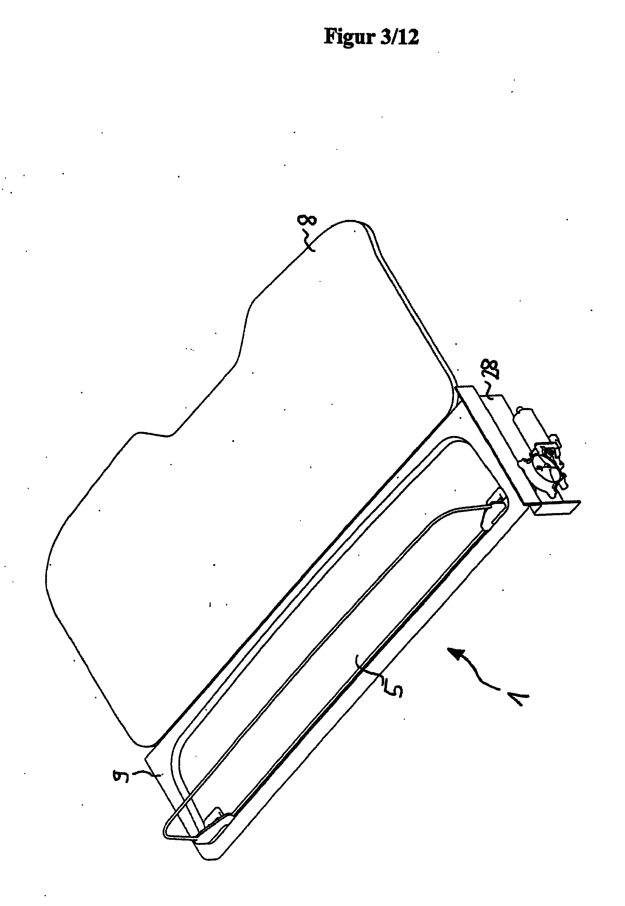

Eine perspektivische Ansicht einer geteilten Hutablage 8 mit geöffneten Sonnenschott 5 ist in Figur 3 dargestellt. Das Sonnenschott 5 ist an einem Hutablagenteil 9 angeordnet, der an die Hutablage 8 angrenzt. Das Hutablagenteil 9 ist an der Seitenverkleidung 28 befestigt. Diese Ausgestaltung bietet den Vorteil im Falle des Öffnens des Kofferraumdeckels, der hier nicht dargestellt ist, dass die Hutablage 8 geschwenkt wird, wohingegen das Hutablagenteil 9 in der Ausgangslage verbleibt. Folglich kann das Sonnenschott 5 in der gewünschten Stellung verbleiben und muss nicht eingefahren werden. Eine derartige Ausgestaltung bietet den Vorteil, dass eine stabile Sonnenschutzvorrichtung 1 bereitgestellt und der Komfort erhöht wird.

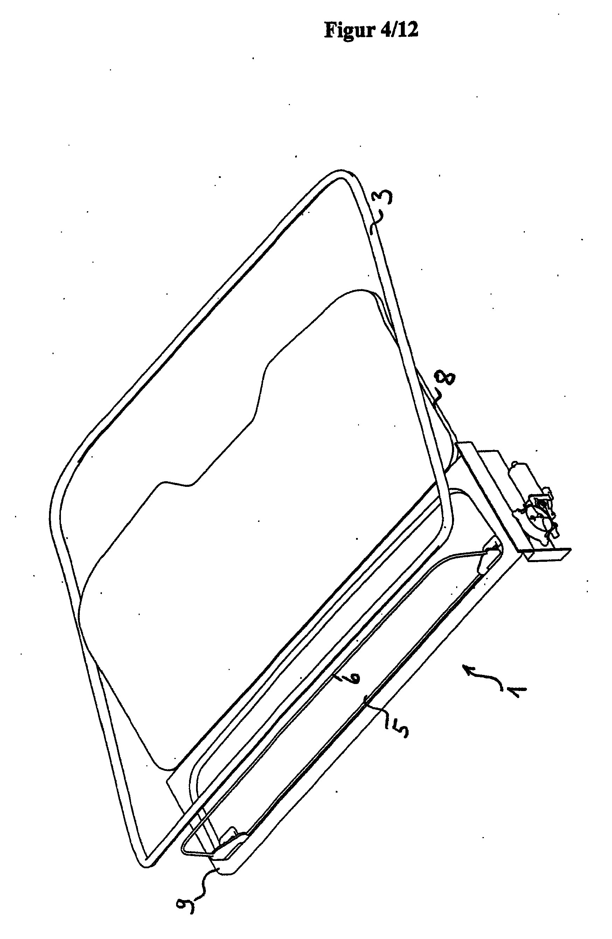

Figur 4 zeigt eine der Figur 3 entsprechende Darstellung im Bereich der Heckscheibe 3. Das Sonnenschott 5 befindet sich in geöffneter Stellung. Die Heckscheibe 3 grenzt an einen Rahmen 6 des Sonnenschotts 5 und an die Hutablage 8 an. Zwischen der Hutablage 8 und dem Hutablageuteil 9 ist ein Spalt ausgebildet, so dass die Hutablage 8 verschwenkt werden kann. Das Hutablagenteil 9 kann entweder fest verschraubt oder lösbar ausgestaltet werden. Vorzugsweise ist das Hutablagenteil 9 lösbar ausgebildet, so dass dieses jederzeit entnommen werden kann, falls der Kofferraum für einen Transport oder dergleichen benötigt wird.

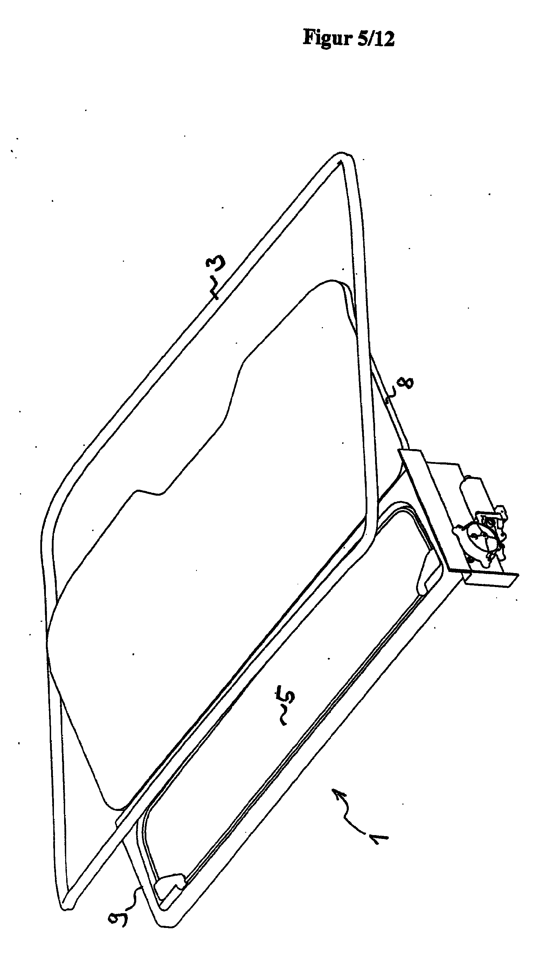

Eine perspektivische Darstellung der in Figur 3 dargestellten Sonnenschutzvorrichtung 1 mit geschlossenen Sonnenschott 5 ist in Figur 5 gezeigt. Die Heckscheibe 3 grenzt an die Hutablage 8 teilweise an. Das Sonnenschott 5 ist in der Vertiefung des Hutablagenteils 9 versenkt und bildet mit der Hutablage 8 eine im Wesentlichen ebene Oberfläche aus. Dadurch kann eine vergrößerte Ablagenoberfläche bereitgestellt werden.

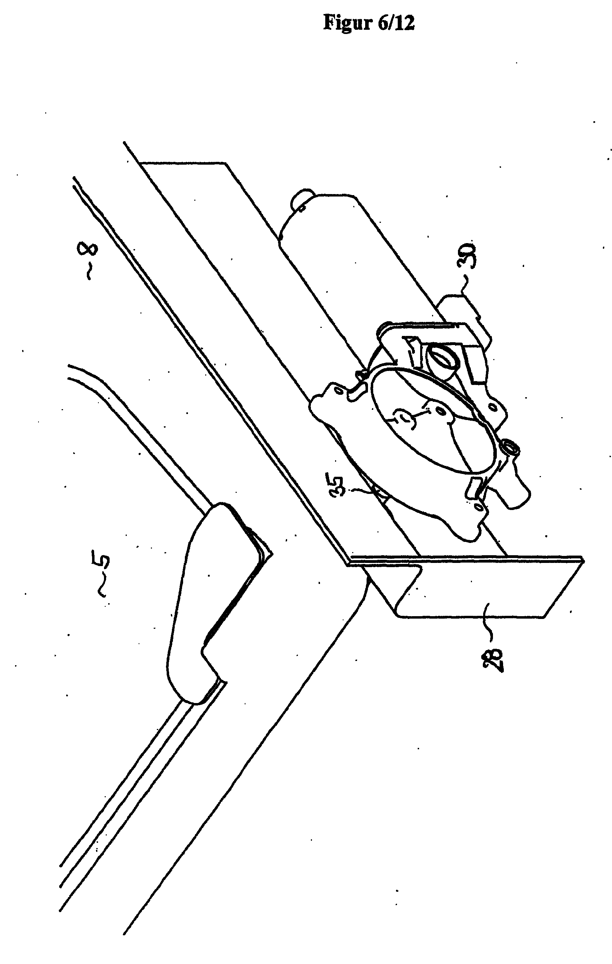

In Figur 6 ist eine perspektivische Teildarstellung der Sonnenschutzvorrichtung 1, wobei die Betätigungseinrichtung 30 im eingebauten Zustand mit der Seitenverkleidung 28 dargestellt ist. Das Sonnenschott 5 befindet sich in der ersten Stellung und ist in der Vertiefung des Hutablagenteils 9 versenkt. Die Betätigungseinrichtung 30 ist ein Motor, der in der Seitenverkleidung 28 des Kofferraums angebracht ist. Der Motor treibt eine Antriebswelle 35 an.

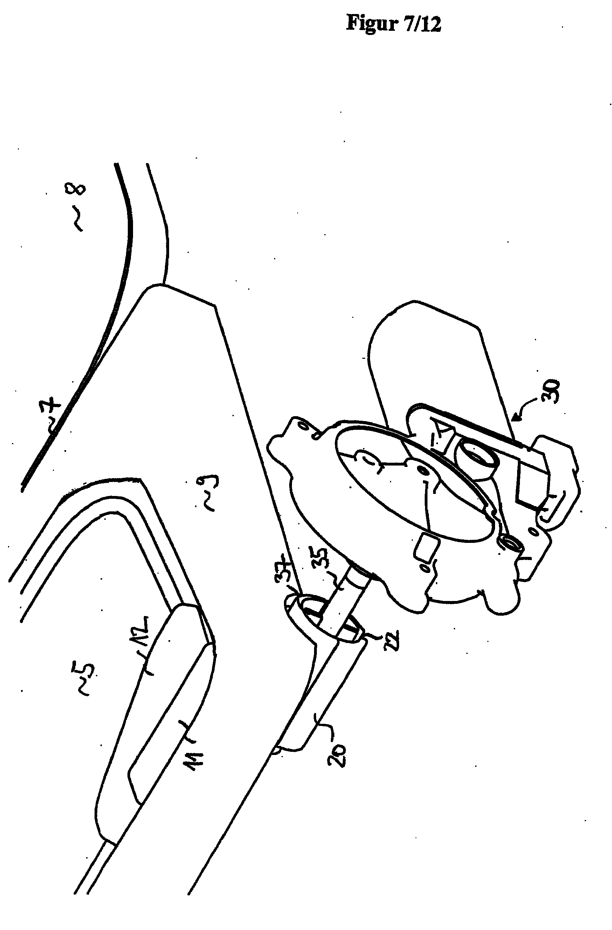

Figur 7 eine der Figur 6 entsprechende perspektivische Teildarstellung der Sonnenschutzvorrichtung 1, wobei die Seitenverkleidung 28 nicht dargestellt wurde, so dass ein Teil der Lagereinrichtung 10 sichtbar ist. An das Hutablagenteil 9 grenzt die Hutablage 8 an und bildet einen Spalt 7 aus. Das Sonnenschott 5 sowie die Lagereinrichtung 10 sind in der Vertiefung des Hutablagenteils 9 angeordnet Die Lagereinrichtung 10 weist einen Grundkörper, einen Schwenkkörper 12 mit einer Abdeckung und einen Zapfen 20 mit einer Nut 22 auf. Am distalen Ende der Antriebswelle 35 der Betätigungseinrichtung 30 ist ein Eingriffsbauteil 37 befestigt. Das Eingriffsbauteil 37 ist innerhalb des Zapfens 20 der Lagereinrichtung 10 angeordnet Durch Aktivierung der Betätigungseinrichtung 30 wird die Antriebswelle 35 angetrieben und das Sonnenschott 5 wird von der ersten Stellung in eine gewünschte Zwischenstellung oder in die zweite Stellung geschwenkt und anschließend in dieser zweiten Stellung gehalten.

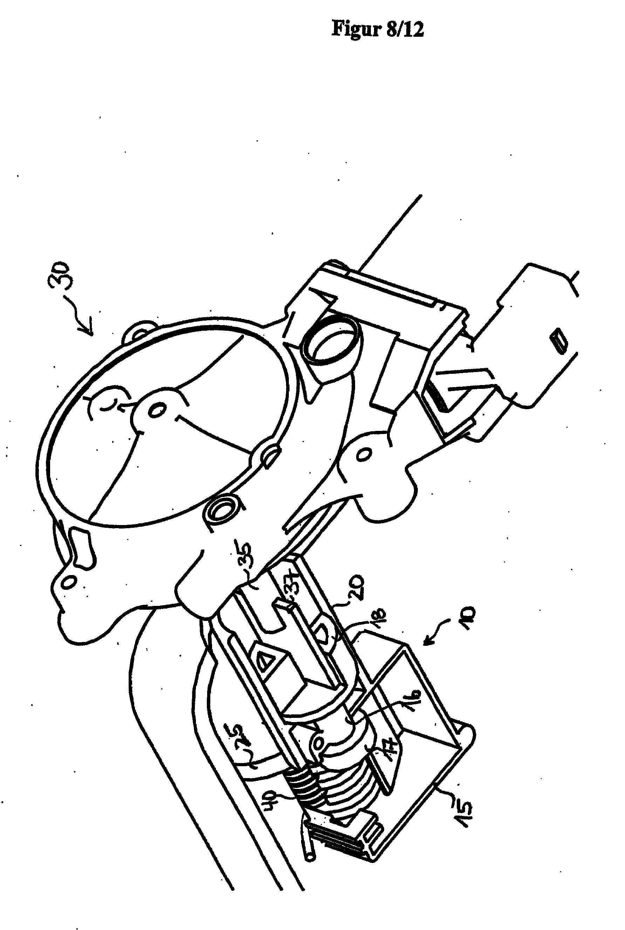

Figur 8 zeigt eine perspektivische Darstellung von einer Betätigungseinrichtung 30 und einer Lagereinrichtung 10. Die Lagereinrichtung 10 umfasst ein Lagergehäuse 15, in der ein Federelement 40 angeordnet ist. Das Federelement 40 ist insbesondere eine Rückstellfeder und erzeugt in der ersten Stellung eine Vorspannung, so dass dadurch das Sonnenschott 5 in der Vertiefung der Hutablage 8 bzw. des Hutablagenteils 9 gehalten wird. Das Lagergehäuse 15 wird an die Hutablage 8 bzw. das Hutablagenteils 9 geschraubt und fixiert. In der Lagereinrichtung 10 ist eine Schwenkachse 16 angeordnet Die Schwenkachse 16 hat an einem distalen Ende einen Flansch 17 und am anderen distalen Ende ist ein Eingriffsabschnitt 18 ausgebildet. Der Eingriffsabschnitt 18 der Schwenkachse 16 steht mit dem Eingriffsbauteil 37 der Antriebswelle 35 form- und/oder kraftschlüssig im Eingriff. Das Ende des Eingriffsbauteils 37 ist am Ende abgeflacht. Dieser flache Abschnitt ist einstückig oder durch eine flache Platte ausgebildet. Die Antriebswelle 35 und die Schwenkachse 16 sind im Wesentlichen fluchtend bzw. parallel innerhalb des Zapfens 20 ausgebildet. Durch Drehung der Antriebswelle 35 der Betätigungseinrichtung 30 wird die Schwenkachse 16 der Lagereinrichtung 10 angetrieben.

Das Sonnenschott 5 ist über eine Drehachse 24, die in Figur 8 nicht zu erkennen ist, drehbar gelagert. Die Drehachse 24 hat an einem distalen Ende einen Flansch 25, der mit dem Flansch 17 der Schwenkachse 16 in Eingriff steht. Die Drehachse 24 und die Schwenkachse 16 sind im Wesentlichen versetzt angeordnet. Der Flansch 25 und der Flansch 17 können eine Verzahnung aufweisen, die ineinander greifen. Hier kann insbesondere eine reibschlüssige Kupplung vorgesehen werden.

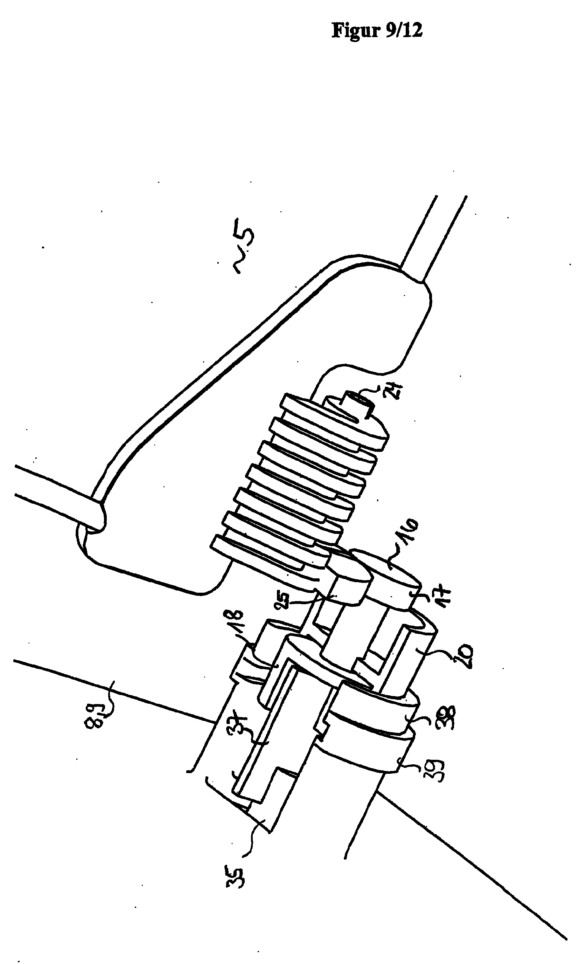

In Figur 9 ist eine perspektivische Teilansicht einer bevorzugten Kupplungsanordnung einer Sonnenschutzvorrichtung 1 dargestellt. Das Sonnenschott 5 befindet sich in der zweiten Stellung, bzw. in geöffneter Stellung und wird über die Drehachse 24 geschwenkt. Das Federelement 40, das hier nicht sichtbar ist, übt eine ständige Kraft in Richtung der ersten Stellung bzw. Ruhestellung aus. Der Flansch 25 der Drehachse 24 steht mit dem Flansch 17 der Schwenkachse 16 in Eingriff. Verschiedene Kupplungsarten können hier verwendet werden. Die Drehachse 24 und die Schwenkachse 16 sind im Wesentlichen versetzt angeordnet. Der Eingriffsabschnitt 18 der Schwenkachse 16 steht mit dem Eingriffsbauteil 37 der Antriebswelle 35 form- und/oder kraftschlüssig im Eingriff. Der Zapfen 20 ist in einem rohrtlirmigen Abschnitt 38, der eine umlaufende Vertiefung bzw. Vorkragung 39 aufweist, drehbar gelagert, seitlich fixiert und kann axial verschoben werden. Der rohrförmige Abschnitt 38 ist in der Seitenverkleidung des Kofferraums angeordnet. Damit wird die Hutablage 8 bzw. das Hutablagenteil 9 über die Zapfenverbindung 20 in die Seitenverkleidung angebunden.

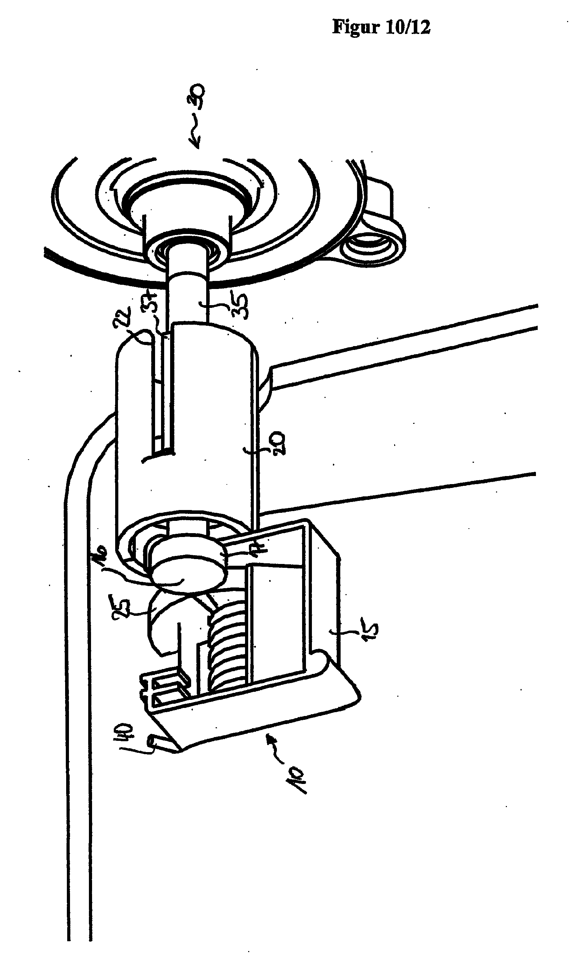

In Figur 10 zeigt eine perspektivische Darstellung einer Betätigungseinrichtung 30 und einer Lagereinrichtung 10. In Figur 10 wurden gleiche Bauteile mit gleichen Bezugszeichen wie in Figur 9 versehen. Die Lagereinrichtung 10 hat ein Lagergehäuse 15 und einen Zapfen 20. Der Zapfen 20 besitzt eine Nut 22. Die Antriebswelle 35 weist am distalen Ende ein Eingriffsbauteil 37 auf, das am Ende abgeflacht ist. Der abgeflachte Teil ist insbesondere eine rechteckige Platte. Über die Nut 22 kann die Kraftübertragung von der Betätigungseinrichtung 30 bzw. dem Motor stattfinden. Durch diese. Ausgestaltung kann auch eine Lösbarkeit der Hutablage, in Figur 10 nicht gezeigt, sichergestellt werden.

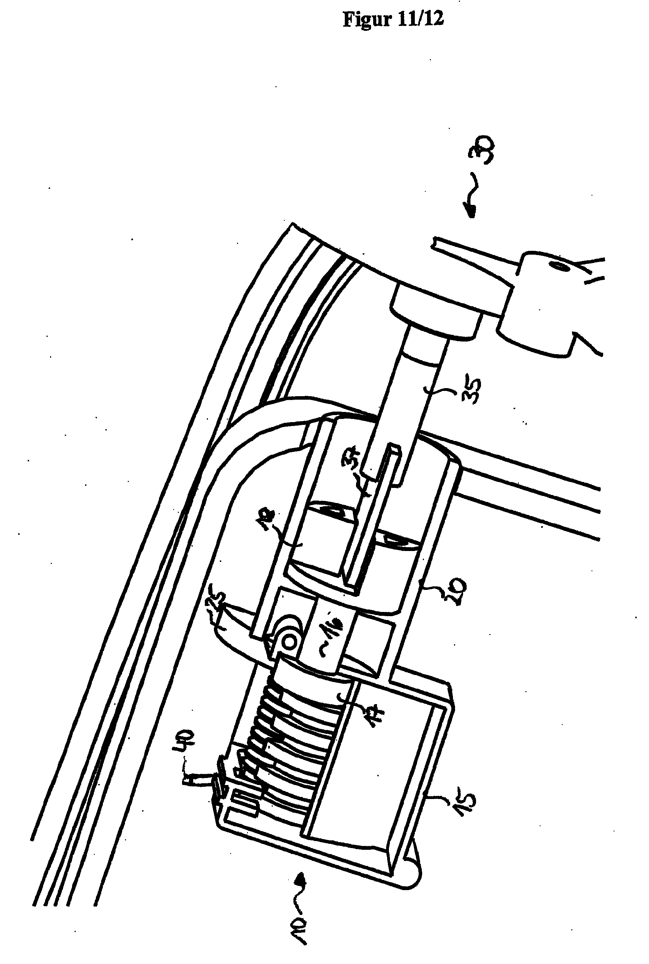

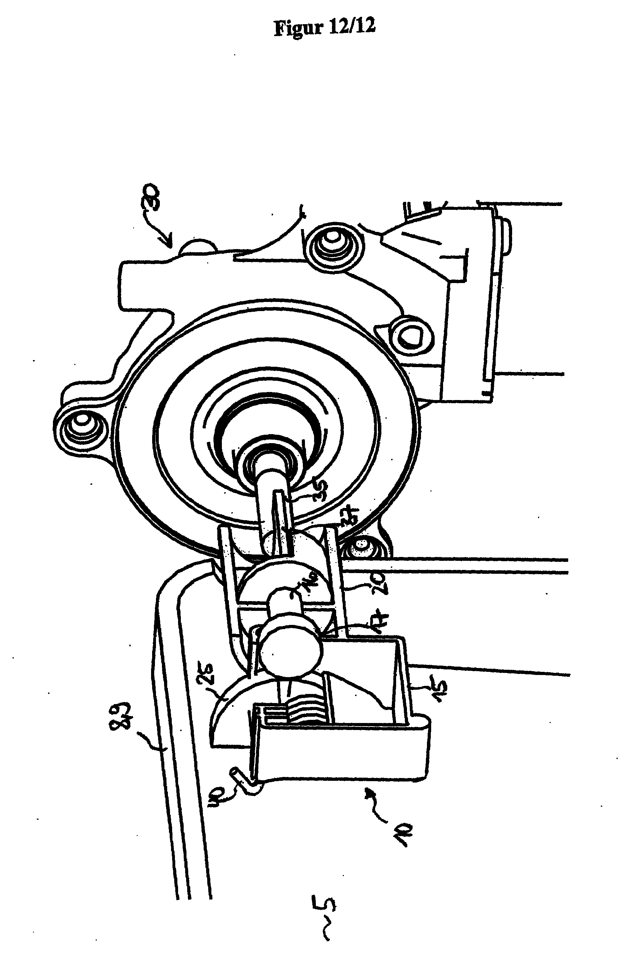

Die Figuren 11 und 12 zeigen eine gedrehte perspektivische Darstellung von Figur 8. Gleiche Bauteile wurden mit gleichen Bezugszeichen versehen.

Zusammenfassend ist festzuhalten, dass das erfindungsgemäße Konzept darauf beruht, eine Sonnenschutzvorrichtung bereitzustellen, die den Fahrzeugkomfort steigert, eine einfache Verschwenkung des Sonnenschotts ermöglicht, wobei die Verkehrssicherheit erhöht wird.

Obwohl die vorliegende Erfindung vorangehend unter Bezugnahme auf derzeit bevorzugte Ausführungsformen beschrieben wurde, sollte der Fachmann erkennen, dass verschiedene Veränderungsmöglichkeiten im Rahmen der beiliegenden Ansprüche möglich sind, ohne von dem erfindungsgemäßen Konzept und dem beanspruchten Schutz abzuweichen.

Insbesondere sollte der Fachmann erkennen, dass verschiedenste motorische Antriebseinheiten verwendet werden können und unterschiedliche Ausgestaltungen möglich sind. Ferner sind verschiedenen Kupplungsmöglichkeiten, insbesondere form- und/oder kraftschlüssige Kupplungen und Reibkupplungen wie Rutschkupplungen verwendbar. Außerdem können als Eingriffsbauteile Zahnräder verwendet werden, die eine Unter- oder Übersetzung bereitstellen können.

## Patentansprüche

1. Sonnenschutzvorrichtung (1), insbesondere zur Anordnung an einer Hutablage (8) oder Hutablagenteil (9), umfassend ein Sonnenschott (5) und zumindest eine Lagereinrichtung (10), die eine Drehung des Sonnenschotts (5) zwischen einer ersten Stellung als Ruhestellung und einer zweiten Stellung als Funktionsstellung ermöglicht, **dadurch gekennzeichnet, dass** zumindest ein Federelement (40) vorgesehen ist, welches das Sonnenschott (5) in der ersten Stellung vorspannt und zumindest eine Betätigungseinrichtung (30) vorgesehen ist, die eine Betätigung entgegen der Vorspannung des zumindest einen Federelements (40) in Richtung der zweiten Stellung ermöglicht.

2. Sonnenschutzvorrichtung (1) nach Anspruch 1, **dadurch gekennzeichnet, dass** das Sonnenschott (5) an beiden distalen Enden eine Lagereinrichtung (10) aufweist.

3. Sonnenschutzvorrichtung (1) nach Anspruch 1 oder 2, **dadurch gekennzeichnet, dass** die beiden Lagereinrichtungen (10) durch eine Betätigungseinrichtung (30) antreibbar ist.

4. Sonnenschutzvorrichtung (1) nach Anspruch 1, 2 oder 3, **dadurch gekennzeichnet, dass** an beiden Lagereinrichtungen (10) jeweils eine Betätigungseinrichtung (30) vorgesehen ist.

5. Sonnenschutzvorrichtung (1) nach einem der vorherigen Ansprüche, **dadurch gekennzeichnet, dass** die zumindest eine Lagereinrichtung (10) einen drehbar gelagerten Scharnierhebel, eine Schwenkachse (16), einen Zapfen (20) und ein Lagergehäuse (15), in der das zumindest eine Federelement (40) ausgebildet ist, umfasst.

6. Sonnenschutzvorrichtung (1) nach Anspruch 5, **dadurch gekennzeichnet, dass** der Scharnierhebel in einem Profil über das zumindest eine Federelement (40) gelagert ist.

7. Sonnenschutzvorrichtung (1) nach Anspruch 5 oder 6, **dadurch gekennzeichnet, dass** der Scharnierhebel in einer Endkappe des Profils angeordnet ist

8. Sonnenschutzvorrichtung (1) nach Anspruch 5 bis 7, **dadurch gekennzeichnet, dass** der Zapfen (20) der zumindest einen Lagereinrichtung (10) eine Nut (22) aufweist.

9. Sonnenschutzvorrichtung (1) nach einem der vorherigen Ansprüche, **dadurch gekennzeichnet, dass** das Lagergehäuse (15) an der Hutablage (8) oder Hutablagenteil (9) befestigbar ist.

10. Sonnenschutzvorrichtung (1) nach einem der vorherigen Ansprüche, **dadurch gekennzeichnet, dass** die zumindest eine Betätigungseinrichtung (30) eine Antriebswelle (35) umfasst, die innerhalb des Zapfens (20) der zumindest einen Lagereinrichtung (10) radial verschiebbar ausgebildet ist.

11. Sonnenschutzvorrichtung (1) nach einem der vorherigen Ansprüche, **dadurch gekennzeichnet, dass** die Antriebswelle (35) der zumindest einen Betätigungseinrichtung (30) und die Schwenkachse (16) der zumindest einen Lagereinrichtung (10) fluchtend oder versetzt ausgebildet ist.

12. Sonnenschutzvorrichtung (1) nach einem der vorherigen Ansprüche, **dadurch gekennzeichnet, dass** das Sonnenschott (5) eine Drehachse (24) aufweist, die zur Antriebswelle (35) der zumindest einen Betätigungseinrichtung (30) fluchtend oder versetzt ausgebildet ist.

13. Sonnenschutzvorrichtung (1) nach einem der vorherigen Ansprüche, **dadurch gekennzeichnet, dass** die zumindest eine Betätigungseinrichtung (30) ein Elektromotor ist.

14. Sonnenschutzvorrichtung (1) nach einem der vorherigen Ansprüche, **dadurch gekennzeichnet, dass** die Schwenkachse (16) der zumindest einen Lagereinrichtung (10) und die Antriebswelle (35) der zumindest einen Betätigungseinrichtung (30) in Eingriff bringbar ist.

15. Sonnenschutzvorrichtung (1) nach einem der vorherigen Ansprüche, **dadurch gekennzeichnet, dass** die Schwenkachse (16) der zumindest einen Lagereinrichtung (10) und die Antriebswelle (35) der zumindest einen Betätigungseinrichtung (30) durch eine formschlüssige Schaltkupplung, eine kraft- bzw. reibschlüssige Schaltkupplung oder eine selbsttätig schaltende Kupplung verbunden ist.

16. Sonnenschutzvorrichtung (1) nach einem der vorherigen Ansprüche, **dadurch gekennzeichnet, dass** die Schwenkachse (16) der zumindest einen Lagereinrichtung (10) und die Antriebswelle (35) der zumindest einen Betätigungseinrichtung (30) eine selbstlösende Kupplung, insbesondere Rutschkupplung ausbildet.

17. Sonnenschutzvorrichtung (1) nach einem der vorherigen Ansprüche, **dadurch gekennzeichnet, dass** die zumindest eine Betätigungseinrichtung (30) über eine Steuereinheit steuerbar ist.

18. Sonnenschutzvorrichtung (1) nach einem der vorherigen Ansprüche, **dadurch gekennzeichnet, dass** an der zumindest einen Lagereinrichtung (10) zumindest ein Dämpfungselement vorgesehen ist.

19. Sonnenschutzvorrichtung (1) nach einem der vorherigen Ansprüche, **dadurch gekennzeichnet, dass** für die zweite Stellung des Sonnenschotts (5) ein Anschlag zwischen Scharnierhebel und Endkappe vorgesehen ist.

20. Sonnenschutzvorrichtung (1) nach einem der vorherigen Ansprüche, **dadurch gekennzeichnet, dass** der Schwenkweg zwischen der ersten und der zweiten Stellung etwa 90°, vorzugsweise weniger als 120° beträgt.
